(19) **Europäisches Patentamt / European Patent Office / Office européen des brevets**

(11) **EP 4 127 761 B1**

(12) **EUROPEAN PATENT SPECIFICATION**

(45) Date of publication and mention
of the grant of the patent:
**07.05.2025 Bulletin 2025/19**

(21) Application number: **20718789.9**

(22) Date of filing: **31.03.2020**

(51) International Patent Classification (IPC):
***G01S 5/00*** (2006.01)      ***G01S 5/02*** (2010.01)
***G01S 11/04*** (2006.01)      ***G01S 5/12*** (2006.01)

(52) Cooperative Patent Classification (CPC):
**G01S 5/017; G01S 5/0258; G01S 5/02685;
G01S 5/0269; G01S 5/0294; G01S 5/12;
G08G 5/22; G08G 5/26; G08G 5/55; G08G 5/727;**
G01S 3/14; G01S 5/0081; G01S 5/0278;
G01S 13/765; G08G 5/57;      (Cont.)

(86) International application number:
**PCT/IB2020/053055**

(87) International publication number:
**WO 2021/198729 (07.10.2021 Gazette 2021/40)**

(54) **DRONE STATE ESTIMATION BY SINGLE BASE STATION**

DROHNENSTATUSSCHÄTZUNG DURCH EINE EINZELBASISSTATION

ESTIMATION D'ÉTAT DE DRONE PAR UNE SEULE STATION DE BASE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.02.2023 Bulletin 2023/06**

(73) Proprietor: **Telefonaktiebolaget LM Ericsson
(publ)
164 83 Stockholm (SE)**

(72) Inventors:
• **YASINI, Sholeh
174 41 Sundbyberg (SE)**
• **WIGREN, Torbjörn
756 53 Uppsala (SE)**

(74) Representative: **Ericsson
Patent Development
Torshamnsgatan 21-23
164 80 Stockholm (SE)**

(56) References cited:
**EP-A1- 3 420 742      EP-B1- 3 420 742
WO-A1-2019/193469      US-A1- 2017 060 810
US-A1- 2018 152 909**

• **WANG XIAOPING ET AL: "Collaborative
unmanned aerial systems for effective and
efficient airborne surveillance", PROCEEDINGS
OF SPIE; [PROCEEDINGS OF SPIE ISSN
0277-786X VOLUME 10524], SPIE, US, vol. 10652,
9 May 2018 (2018-05-09), pages 106520F -
106520F, XP060105298, ISBN: 978-1-5106-1533-5,
DOI: 10.1117/12.2306298**
• **CANOLLA ADRIANO ET AL: "Interactive multiple
model sensor analysis for Unmanned Aircraft
Systems (UAS) Detect and Avoid (DAA)", 2018
IEEE/ION POSITION, LOCATION AND
NAVIGATION SYMPOSIUM (PLANS), IEEE, 23
April 2018 (2018-04-23), pages 757 - 766,
XP033354014, DOI: 10.1109/
PLANS.2018.8373451**

**EP 4 127 761 B1**

(Cont. next page)

(52) Cooperative Patent Classification (CPC): (Cont.)
G08G 5/59

**Description**

TECHNICAL FIELD

Embodiments of the present disclosure are directed to wireless communications and, more particularly, to estimating the state of an aerial vehicle, such as a drone, using a single base station.

BACKGROUND

Generally, all terms used herein are to be interpreted according to their ordinary meaning in the relevant technical field, unless a different meaning is clearly given and/or is implied from the context in which it is used. All references to alan/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Airborne radio-controlled drones are becoming more and more common. In the past, drones were limited to remain within range of the radio control equipment dedicated to control the drone.

However, recent functionality facilitating remote control of drones over the cellular network has increased their range considerably. This can be achieved, for example, by attaching a long term evolution (LTE) user equipment (UE) to the drone and coupling the UE to the drone's navigation system. The drone is thus enabled to travel over multiple cells resulting in ranges that are limited only by, for example, the battery capacity of the drone.

Another type of commercially available camera drones are equipped with dedicated radio control equipment with ranges exceeding 5 km. Such drones are relatively inexpensive and are expected to become commonly used for private flying. These drones are typically equipped with a 4G/5G radio transceiver used for high speed transmission of real time video from the drone camera to a smart phone belonging to the drone pilot. The smartphone is attached to the radio control equipment and used for real time display of the drone camera video.

In some markets, this is already being regulated, and UEs attached to drones are registered as such. In some markets, like in Sweden, camera drones can be used without registration if the weight is below 7 kgs, which is the case for almost all non-professional camera drones. The pilot is supposed to follow the flight rules, but because the drone is not registered, many pilots may not know that there are flight rules which may lead to an increasing number of violations.

In addition, in other markets, a large amount of users fail to register. Such users that either fail to register, or that fly illegally because of, for example, ignorance of flight rules, are denoted as "rogue drones".

Thus, LTE and new radio (NR) capable drones need to be restricted in terms of their flight. This is particularly the case for rogue drones. To restrict their flight, it is necessary to estimate their location and movements, and also to determine if the UE is attached to a drone or not.

A first underlying reason for this need is that rogue drones create hazardous situations when flying illegally in certain parts of the airspace. Examples include airports, where commercial air traffic may be at danger, other restricted areas, and the airspace over densely populated areas where a crash is likely to cause human injuries. This is likely to be a major concern for aviation authorities and thereby for cellular operators. Recently, Gatwick International Airport, London UK, had to close down for many hours because of rogue drones. Early in 2019, the same situation occurred at Heathrow International Airport, London, UK. Costs amounted to millions of pounds.

A second reason for the above need is that rogue drones that transmit and receive cellular radio messages at significant altitudes tend to create more interference than ground based UEs. Because there are less obstacles when the altitude of the drone is significant, propagation can be close to free-space propagation. The interference therefore reaches further and creates interference problems also in adjacent cells. At higher altitudes, drones may also be served by the sidelobes of radio base station antennas that are downtilted. This may increase the risk of sudden signal changes.

There currently exist certain challenges. For example, there are a number of lacking items that prevent an eNB/gNB-only implementation (i.e., performed entirely in a single gNB or eNB) of a state estimation system to identify such rogue drones. Some of the items include the following.

There is not an accurate enough range measurement principle available that provides measurement of range or a related quantity from a gNBs to a drone, to be used for rogue drone state estimation in a single gNB (or eNB with reduced accuracy).

There is no drone state estimation technology that is able to fuse range only information from a single gNBs or eNB, with directional information (angle of arrival (AoA) or angle of transmission (AoT)) in two dimensions given by azimuth and elevation, thereby providing Cartesian drone state estimate information with accurately estimated altitude and altitude velocity.

There is no drone state estimation technology that handles the unique drone movement mode of hovering, at the same time as handling normal flight modes like straight line motion and maneuvering. There is no drone state estimation technology that restricts direct switching between constant velocity movement and hovering.

There is no signaling functionality in the present Third Generation Partnership Project (3GPP) NR wireless standards that facilitates distribution of rough drone state estimates and related, derived information, to the radio access network (RAN) gNB (or eNB) nodes or other core network (CN) nodes that could be used to detach or interrupt drone communication, or alert relevant bodies that could take action against the illegal activity.

US 2018/152909 A1 discloses a first wireless unmanned aerial vehicle (UAV)-locating signal being transmitted by a wireless network access point in a network based on a first UAV-locating mode selected from a plurality of UAV-locating modes. The wireless network access point receives a wireless signal in response to the first transmitted UAV-locating signal, the wireless signal indicative of a location of an airborne UAV, and causes the determination of the location of the airborne UAV based on the received wireless signal. The wireless network access point transmits a second wireless UAV-locating signal based on a second UAV-locating mode selected from the plurality of UAV-locating modes. The selected UAV-locating modes control an emission pattern of an antenna of the wireless network access point.

US 2017/060810 A1 discloses a vehicle system and method for the acquisition and transformation of data from vehicle mounted sensors oriented to monitor the environment proximate the vehicle for relevant objects. Data transformations are accomplished using polar to Cartesian debiased corrections, recursive filters, and measurement-to-track update techniques.

SUMMARY

As described above, there currently exist certain challenges with detecting aerial vehicles, such as drones, using only a single network node, such as a gNB or eNB. Certain aspects of the present disclosure and their embodiments may provide solutions to these or other challenges.

According to one aspect of the present invention, a method for use in a network node is provided in accordance with claim 1.

According to another aspect of the present invention, a network node is provided in accordance with claim 12.

According to another aspect of the present invention, a non-transitory computer readable medium is provided in accordance with claim 13.

According to another aspect of the present invention, a computer program product is provided in accordance with claim 14.

For example, particular embodiments fuse range information with directional information to estimate the Cartesian movement state of a drone using a single network node. More specifically, particular embodiments include one or more of the following elements:

Particular embodiments include an interactive multiple modeling (IMM) filter performing drone state estimation in a single gNB (or eNB with reduced accuracy). The IMM filter fuses range information, typically obtained with a round trip time measurement, with directional information in azimuth and elevation. The directional information may be obtained, for example, by codebook based or reciprocity assisted beamforming techniques.

The IMM filter is characterized by a) a combination of movement models adapted to the hovering capabilities of drones, b) a restricted mode transition probability model reflecting the characteristics of the hovering capability, and/or c) integrated measurement fusion of range only measurements with respect to multiple eNBs/gNBs.

Some embodiments include signaling for distribution of estimated drone information and information derived therefrom, to radio access network (RAN) eNBs/gNBs, other evolved packet core (EPC) nodes than the state estimation node, or to external sources.

While particular embodiments and examples are described with respect to new radio (NR) using the accurate round trip time (RTT) measurement, other embodiments may rely on long term evolution (LTE) and a timing advance (TA) measurement.

Certain embodiments may provide one or more of the following technical advantages. For example, particular embodiments can pinpoint the location of rogue drones with an accuracy that allows countermeasures to be exercised effectively. Particular embodiments are implemented in a single eNb or gNB, without any need for coordination with other base stations. Other advantages include lower development cost, lower cost of operation and significantly easier handling.

BRIEF DESCRIPTION OF THE DRAWINGS

For a more complete understanding of the disclosed embodiments and their features and advantages, reference is now made to the following description, taken in conjunction with the accompanying drawings, in which:

FIGURE 1 is a block-diagram of a multi-sensor air vehicle state estimation system;
FIGURE 2 is a block diagram illustrating the IMM algorithm;
FIGURE 3 is a flowchart illustrating one cycle of the state estimation of a linear system with nonlinear measurement;
FIGURE 4 is a sequence diagram illustrating the principle of a WCDMA RTT measurement and an LTE TA measurement;
FIGURE 5 illustrates the drone state estimation problem solved by particular embodiments;
FIGURE 6 is a three-dimensional graph illustrating a flight path of a drone;
FIGURE 7 is a time graph illustrating the probability that the IMM model is in any of the three modes at a particular time;
FIGURE 8 is a block diagram illustrating an example wireless network;
FIGURE 9 is a flowchart illustrating an example method in a network node, according to certain embodiments;
FIGURE 10 illustrates an example network node, according to certain embodiments; and
FIGURE 11 illustrates an example virtualization environment, according to certain embodiments.

DETAILED DESCRIPTION

As described above, there currently exist certain challenges with detecting aerial vehicles, such as drones, using only a single network node, such as a gNB or eNB. Certain aspects of the present disclosure and their embodiments may provide solutions to these or other challenges.

Particular embodiments are described more fully with reference to the accompanying drawings. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art.

In general, particular embodiments include one or more components that are further discussed below. One component is high accuracy range information based on a high accuracy round trip time measurement with respect to the serving base station. Some embodiments may use new radio (NR) round trip time (RTT) measurements, and some may use long term evolution (LTE) timing advance (TA) measurements. Another component is high accuracy distance information in terms of angle of arrival (AoA) or angle of transmission (AoT) derived in the gNB or eNB.

Some embodiments include improved drone movement modeling methods and drone state estimation algorithms that fuse range and directional measurements with movement model information. Some embodiments include signaling of rogue drone state information for interference mitigation and/or flight restriction.

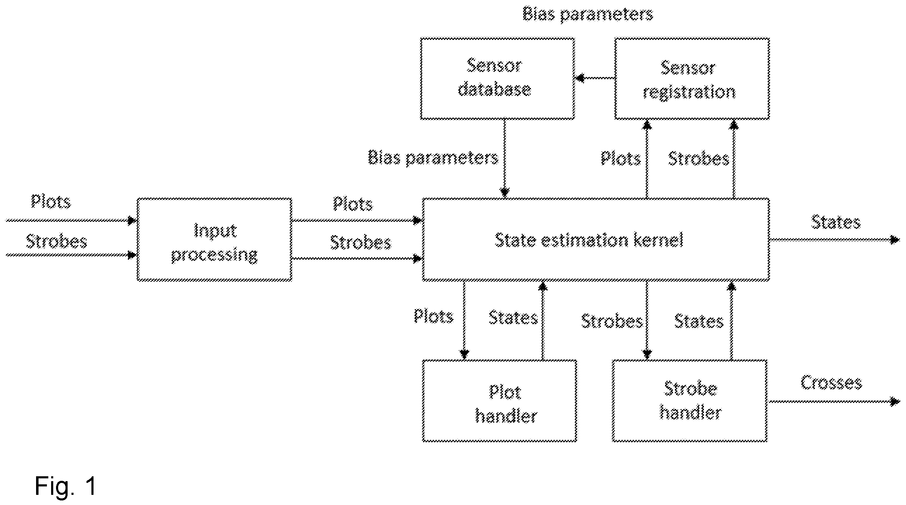

The technical field of air vehicle state estimation is mature today, with many systems operational worldwide. An example is illustrated in FIGURE 1.

FIGURE 1 is a block-diagram of a multi-sensor air vehicle state estimation system. As illustrated, measurements consisting of strobes (angle only measurements) and plots (Cartesian position measurements) are collected from the sensors attached to the air vehicle estimation system. The plots and strobes are sent for association with existing three-dimensional (3D) state estimates.

Association is the process of determining which measurements that belong to each state estimate. (Association may not apply to particular embodiments described herein because each user equipment (UE) has a unique ID when attached to the cellular system.) The association is performed in the measurement space of each sensor, i.e. the state estimates (that typically reside in an earth tangential Cartesian coordinate system) are transformed to the measurement space of each sensor. Associated data then updates state estimates with Kalman filtering techniques discussed further below, again in the measurement space of each sensor.

Plots and strobes that are not associated may originate from new objects and they are sent to the plot handler or the strobe handler for initiation of new state estimates. Advanced state initiation is not needed for particular embodiments described herein, but the techniques may be combined with particular embodiments for further enhancement. Plots and strobes that are associated to high quality estimates are also used for computation of sensor bias parameters in the sensor registration block. The sensor registration is also not needed for particular embodiments, but the techniques may be combined with the current invention for further enhancement.

Drone state estimation may be performed using multiple mode estimation. To accurately estimate the movement state of a drone, it is first recognized that drones fly in specific ways. These modes of movement may be reflected by the estimator applied for measurement processing.

There are many methods for estimation when multiple dynamic modes describe the behavior of an object whose state is estimated. A first and more general way of performing such estimation is to use the joint probability distribution of the objects state. The propagation of the state forward in time may be governed by the Fokker-Planck partial differential equation. The measurement processing is performed by a multi-dimensional integration to obtain the posterior probability state distribution from the likelihood of the measurement and the prior probability distribution. This process is referred to as Bayesian inference.

It is however significantly more computationally complex and memory intensive than the embodiments described herein. Bayesian inference is today approximated by particle filters, in which the probability density functions are discretized in terms of individual "particles". Because particle filtering is still significantly more complex than the embodiments described herein, the details are not discussed in detail.

At the other complexity extreme, each mode may be modeled separately and also estimated separately. Ad hoc logic may be used to select the movement mode. Traditional air vehicle state estimation is designed in that way. One movement mode is assumed to be constant velocity movement, i.e. straight line movement, and the other movement mode is a maneuver mode, modeled by a leaky constant velocity movement that responds to measurements with much higher agility than the constant velocity mode. A maneuver detector is used to choose the maneuver filter in case matches measurements better. After the maneuver is terminated, a re-initialized constant velocity movement mode is used for state estimation. This approach is robust but suffers from difficulties in the selection of threshold values for the maneuver detector.

A more systematic approach to the state estimation problem at hand is offered by the interacting-multiple-model (IMM) filter. The IMM algorithm assumes that the system behaves according to one of a finite number of models which is one of several modes. These models can differ in noise levels or their structure, such as different state dimensions and unknown inputs. In the IMM approach, at time $k$ the state estimate is computed under each possible model using r filters, with each filter using a different combination of the previous model-conditioned estimates.

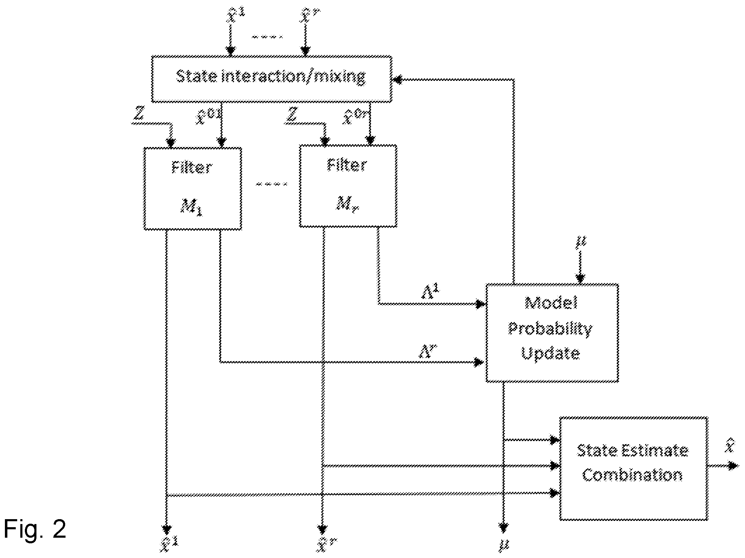

FIGURE 2 is a block diagram illustrating the IMM algorithm. The illustrated example includes one cycle, which consists of r interacting filters operating in parallel. The mixing is done at the input of the filters with the probabilities conditioned on data $Z^{k-1}$. The structure of the IMM algorithm is

$$\left(N_e; N_f\right) = (r; r)$$

where $N_e$ is the number of estimates at the start of the cycle of the algorithm and $N_f$ is the number of filters in the algorithm.

One cycle of the algorithm consists of the following steps. A first step comprises calculation of mixing probabilities $(i, j = 1, \cdots, r)$. The probability that mode $M_i$ was in effect at time $k - 1$ given that $M_j$ is in effect at $k$ conditioned on $Z^{k-1}$ is

$$\mu_{i|j} = \frac{1}{\bar{c}_j} p_{ij} \mu_i(k-1)$$

where the normalizing constants are given by the below equation that uses the mode transition probabilities $p_{ij}$ which is the probability that the estimated object is in mode $j$ at time $k$, conditioned on being in mode $i$ at time $k - 1$. The expression for the normalizing constant is

$$\bar{c}_j = \sum_{i=1}^{r} p_{ij} \mu_i(k-1)$$

A next step comprises mixing $(j = 1, \cdots r)$. Starting with $\hat{x}^i(k-1|k-1)$, the mixed initial condition for the filter matched to $M_j(k)$ is calculated as

$$\hat{x}^{0j}(k-1|k-1) = \sum_{i=1}^{r} \hat{x}^i(k-1|k-1)\mu_{i|j}(k-1|k-1) \quad j = 1, \cdots, r$$

The covariance corresponding to the above is

$$P^{0j}(k-1|k-1)$$

$$= \sum_{i=1}^{r} \mu_{i|j}(k-1|k$$

$$-1)\Big\{P^i(k-1|k-1)$$

$$+ \Big[\hat{x}^i(k-1|k-1)$$

$$- \hat{x}^{0j}(k-1|k-1)\Big].\Big[\hat{x}^i(k-1|k-1) - \hat{x}^{0j}(k-1|k-1)\Big]'\Big\}$$

with ' denotes the transpose.

A next step is mode-matched filtering $(j = 1, \cdots r)$. The estimate and the covariance obtained in the previous step are used as input to the filter matched to $M_j(k)$, which uses $z(k)$ to yield $\hat{x}^j(k|k)$ and $P^j(k|k)$.

The likelihood function corresponding to the r filters

$$\Lambda_j(k) = p[z(k)|M_j(k), Z^{k-1}]$$

are computed using the mixed initial condition and the associated covariance as

$$\Lambda_j(k) = p\Big[z(k)\big|M_j(k), \hat{x}^{0j}(k-1|k-1)P^{0j}(k-1|k-1)\Big] \; j = 1, \cdots, r$$

A next step is model probability update (j = 1, $\cdots$ , r). This is done as follows

$$\mu_j(k) = \frac{1}{c}\Lambda_j(k)\bar{c}_j \qquad j = 1, \cdots, r$$

where $\bar{c}_j$ is given above and

$$c = \sum_{j=1}^{r} \Lambda_j(k)\bar{c}_j$$

is the normalization factor.

The last step is estimate and covariance combination. Combination of the model-conditioned estimates covariances is done according to the mixture equations

$$\hat{x}(k|k) = \sum_{j=1}^{r} \hat{x}^j(k|k)\mu_j(k)$$

$$P(k|k) = \sum_{j=1}^{r} \mu_j(k)\Big\{P^j(k|k) + \Big[\hat{x}^j(k|k) - \hat{x}(k|k)\Big]\Big[\hat{x}^j(k|k) - \hat{x}(k|k)\Big]'\Big\}$$

To set up an IMM filter, three main choices are made: (a) definition of the movement mode; (b) definition of the transition probabilities; and (c) selection of the initial conditions of the filters.

For each movement mode, this amounts to the definition of a state space model, i.e., one vector difference equation that defines the dynamics, and another static vector equation that defines the measurement relation, by mapping states to the measurements. In addition, the inaccuracies of the measurement equation and the dynamic state model are given in terms of the covariance matrices of the uncertainties.

The second choice describes, in terms of a hidden Markov model, how the modes interact, this being expressed in terms of the probabilities of a mode transition of the estimated object between two discrete instances of time.

The third choice is typically made in terms of the expected initial state and covariance of each model.

Some embodiments may use an extended Kalman Filter. For each filter $M_j$, $j = 1, \cdots, r$ a nonlinear extended Kalman filter (EKF) is used. EKF is based on linear approximations of the nonlinear system. It can be used to estimate the state of a discrete-time dynamic system described by a vector difference equation with additive white Gaussian noise that models unpredictable disturbances.

The dynamic model is

$$x(k+1) = F(k)x(k) + v(k)$$

where $x(k)$ is the $n_x$-dimensional state vector, and $v(k)$, $k = 0,1, \cdots$ is the sequence of zero-mean white Gaussian process noise (also $n_x$ vectors) with covariance

$$\mathbb{E}[v(k)v(k)'] = Q(k)$$

The measurement equation is

$$z(k) = h(x(k), k) + w(k) \quad k = 1, \cdots$$

with $h(.)$ a nonlinear function of state and $w(k)$ the sequence of zero-mean Gaussian measurement noise with covariance

$$\mathbb{E}[w(k)w(k)'] = R(k)$$

The matrices $F$, $Q$, $R$ and the function $h(.)$ are assumed known and possibly time varying. In other words, the system can be time varying and the noises nonstationary. The Jacobian of the measurement model $h(x(k), k)$ with respect to $k$ is defined as

$$C(k) = \frac{\partial h(x(k), k)}{\partial x(k)}$$

The initial state x(0), in general unknown, is modeled as a random variable, Gaussian distributed with known mean and covariance. The two noise sequences and the initial state are assumed mutually independent. This constitutes the linear-Gaussian (LG) assumption.

The conditional mean

$$\hat{x}(j|k) = \mathbb{E}[x(j)|Z^k]$$

where $Z^k = \{z(j), j \leq k\}$ denotes the sequence of observations available at time $k$, is the estimate of the state if $j = k$ and predicted value of the state if $j > k$. The conditional covariance matrix of $x(j)$ given the data $Z^k$ or the covariance associated with the estimate is

$$P(j|k) = \mathbb{E}\Big[[x(j) - \hat{x}(j|k)][x(j) - \hat{x}(j|k)]'|Z^k\Big]$$

The estimation algorithm starts with the initial estimate $\hat{x}(0|0)$ of $x(0)$ and the associated initial covariance $P(0|0)$, assumed to be available. The second (conditioning) index 0 stands for $Z^0$, the initial information.

One cycle of the dynamic estimation algorithm - the extended Kalman filter (KF) -thus consists of the computations to obtain the estimate

$$\hat{x}(k|k) = \mathbb{E}[x(k)|Z^k]$$

which is the conditional mean of the state at time k (the current stage) given the observation up to and including time k, and the associated covariance matrix

$$P(k|k) = \mathbb{E}\Big[[x(k) - \hat{x}(k|k)][x(k) - \hat{x}(k|k)]'|Z^k\Big]$$

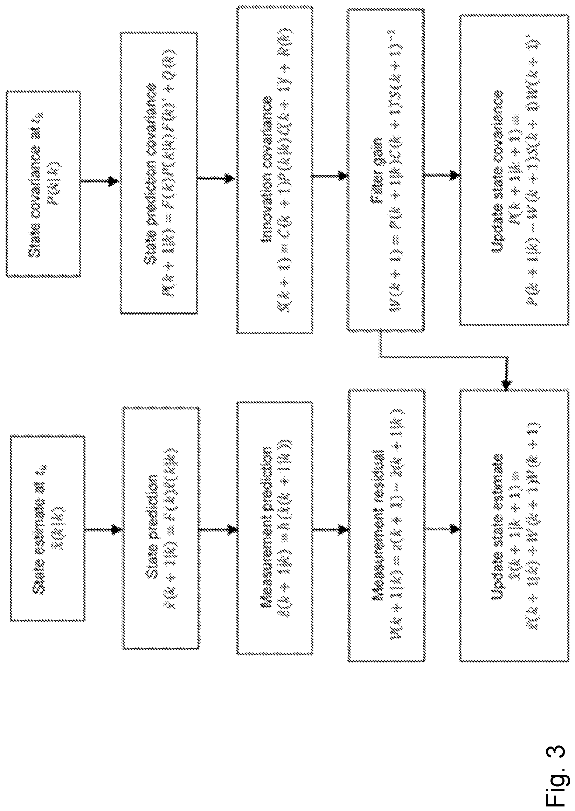

An example of the EKF is illustrated in FIGURE 3, which is a flowchart illustrating one cycle of the state estimation of a linear system with nonlinear measurement.

Particular embodiments include range measurement. There are several possibilities for range measurement. One way is to perform path-loss measurements. Path-loss measurement, however, is not accurate enough for particular embodiments described herein because the path loss is affected by radio fading and range needs to be computed from an assumed radio propagation model.

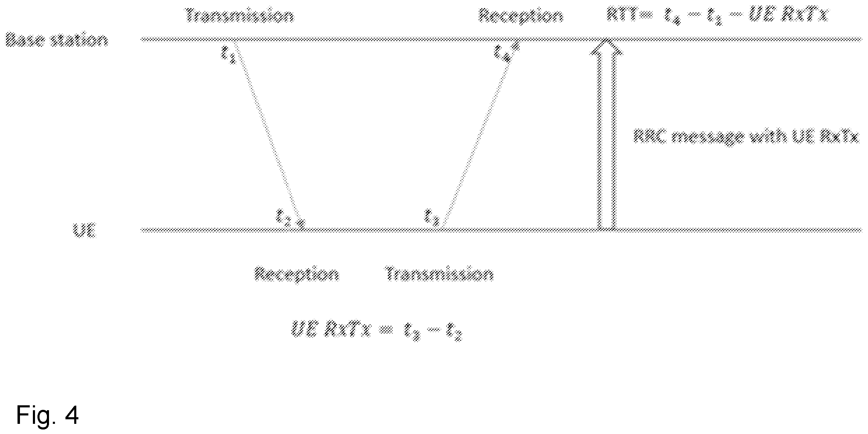

A better and more accurate basis for measurement of range is to measure the travel time of radio waves from a base station and a UE and back, i.e. a round-trip-time measurement. Given the round trip time measurement, the range follows as

$$R = c\,\frac{RTT}{2}$$

where c denotes the speed of light. The principle of the RTT measurement is illustrated in FIGURE 4.

FIGURE 4 is a sequence diagram illustrating the principle of a WCDMA RTT measurement and an LTE TA measurement. The RTT value is thus obtained as

$$RTT = t_4 - t_1 - UE\ RxTx$$

where *UE RxTx* is measured in the UE as

$$UE\ RxTx = t_3 - t_2$$

and reported back to the base station over the radio resource control (RRC) protocol.

The main contribution to any inaccuracy of the measurement originates from the two reception processes in the UE and the base station. The theoretical inaccuracy of one such measurement is, in free space propagation, inversely proportional to the measurement bandwidth, as $\Delta t \geq \frac{1}{4\pi}\frac{1}{\Delta f}$ .

This means that if the measurement bandwidth is for example 30 MHz, then the best time inaccuracy that is possible is 2.65 ns, which corresponds to a little less than 1 m. That is a 1 sigma value. Because two independent measurement processes are used for RTT, a 40 MHz measurement bandwidth results in a combined RTT measurement inaccuracy of about 1 m.

Some embodiments include directional measurements. Particular embodiments may use codebook based beamforming. The beamforming concept may be understood by considering an idealized one-dimensional beamforming case. When the UE is located far away from the antenna array, it follows that the difference in travel distance from the base station to the UE, between adjacent antenna elements, is $l = k\lambda\,sin(\theta)$, where $k\lambda$ is the antenna element separation. Here $k$ is the separation factor, which may be 0.5-0.7 in a typical correlated antenna element arrangement. This means that a reference signal $s_i e^{j\omega t}$ transmitted from the i:th antenna element will arrive at the UE antenna as a weighted sum

$$S_{UE} = \sum_{i=0}^{N-1} s_i h_i e^{j\omega\left(t - \frac{il}{c}\right)} = e^{i\omega t} \sum_{i=0}^{N-1} s_i h_i e^{-2\pi jki sin(\theta)}$$

Here $\omega$ is the angular carrier frequency, $h_i$ is the complex channel from the ith antenna element, $t$ is the time, and $f_c$ is the carrier frequency.

In the above equation, $\theta$ and $h_i$ are unknown. For a feedback solution, the UE therefore needs to search for all complex channel coefficients $h_i$ and the unknown angle $\theta$. For this reason, the standard defines a codebook of beams in different directions given by steering vector coefficients like $w_{mi} = e^{-jf(m,i)}$, where m indicates a directional codebook entry.

The UE then tests each codebook and estimates the channel coefficients. The information rate achieved for each codebook entry m is computed and the best one defines the direction and channel coefficients. This is possible because $s_i$ is known. The result is encoded and reported back to the base station. This provides the base station with a best direction (codebook entry) and information that allows it to build up a channel matrix H. This matrix represents the channel from each of the transmit antenna elements to each of the receive antenna elements. Typically, each element of $H$ is represented by a complex number.

From the above description it follows that the channel state information feedback in itself represent a best angle of transmission, that can also in principle be used for drone state estimation.

Particular embodiments may use reciprocity based AoA estimation for directional measurements. Channel reciprocity is a consequence of Maxwell's equations. Given two nodes equipped with antenna arrays that communicate in a single frequency band, the channel reciprocity property means that at any given point in time, the complex channel coefficient between any transmitting antenna element in one node and any receiving antenna element in the other node is the same (to within a transpose) in the uplink and the downlink. The channel matrix thus essentially remains the same between the antenna arrays of the two nodes when the direction of the transmission is reversed. The two nodes may typically be a UE and a gNB (or eNB in 4G). Note that the time is assumed to be the same for the two directions of transmission.

To take advantage of reciprocity, the channel coefficients can be directly estimated by the base station from UE uplink transmission of known pilot signals, for example, sounding reference signals (SRSs). The estimated channel can be used to compute the combining weight matrix with a selected principle and used for downlink transmission. This works because the uplink and downlink channels are the same (to within a transpose) when reciprocity is valid.

Particular embodiments include reciprocity assisted transmission. The reciprocity assisted transmission scheme is obtained as a minimum mean squared error (MMSE) solution.

To express the requirements on the beamforming weights **W**, a desired situation can be expressed by the equation $\hat{H}W + \tilde{H}W = I$, which is valid for an arbitrary number of users and antenna elements. In this equation, $\hat{H}$ is the estimated channel of dimension (Nrx, Ntx), where Nrx is the total number of receive antennas for all UEs and where Ntx is the number of base station antennas. $\tilde{H}$ is the channel estimation error, assumed to have covariance matrix $\Gamma$. To find the beam weights, an MMSE criterion is used with $E\{WW^H\} = I$ so that the MMSE estimate of becomes $W = \hat{H}(\hat{H}\hat{H}^H + \Gamma)^{-1}$.

Given the beamforming solution, it is possible to compute an antenna diagram with a gain being a function of the direction(s) with respect to the transmit antenna of the gNB. The angle(s) that result in the maximum beam gain can then be selected as the sought AoA. Several other solutions for AoA estimation are also available in the literature.

Some embodiments include ground surface modeling. As will be disclosed below, models for calculation of the altitude above mean sea level of the ground are useful for particular embodiments.

A first example of such a system is a complete geographical information system (GIS) that consist of ground altitude maps covering the region of the cellular system. A second example is to use a configured ground altitude for each antenna site of the cellular system. A third example is to use a model of the ground altitude valid in the interior of each cell of the cellular system.

The models described below are defined in continuous time using differential equations. For computer implementation, they may be discretized. Given a continuous time Wiener process

$$dx = Axdt + Bdv$$

it follows that the discrete time state equation after sampling with the period T is

$$x(k+1) = F_i x(k) + v(k)$$

where

$$F_i = e^{A_iT}, \quad i = 1,2,3$$

$$v(k) = \int_0^T e^{A(T-\tau)}B_i \hat{v}(kT+\tau)d\tau, i = 1,2,3$$

and with the discretized process noise covariance

$$Q = \mathbb{E}[v(k)v(k)'].$$

It is assumed below that all continuous time equations are discretized like this before applying the IMM filter.

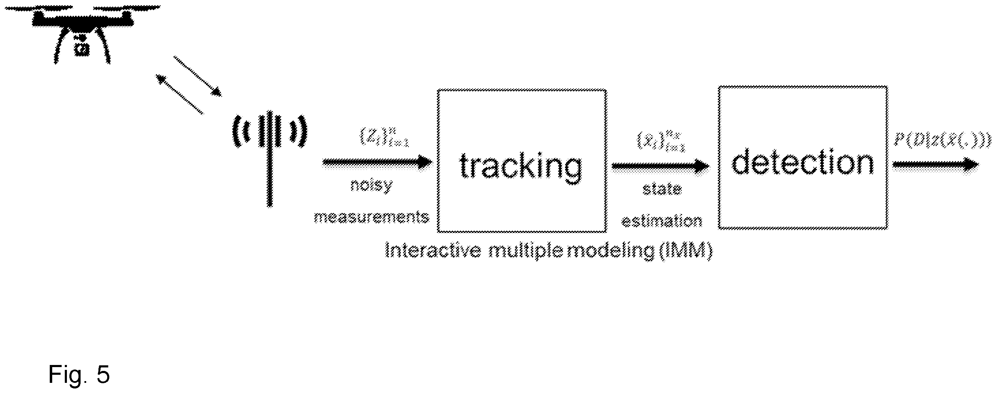

FIGURE 5 illustrates the drone state estimation problem solved by particular embodiments. As illustrated, the base station uses IMM and measurements from the drone to detect and estimate the state of the drone.

Particular embodiments include a three-mode drone movement model. The following three-mode model is adapted to the hovering movement that drones are capable of. The three modes are: (1) 3D (almost) constant velocity movement Wiener process; (2) 3D (almost) constant acceleration movement Wiener process; and (3) 3D (almost hovering) constant position Wiener process.

For the (almost) constant velocity movement model, the continuous time state space constant velocity model is described using the states

$$x(t) = \begin{bmatrix} x_1 \\ x_2 \\ x_3 \\ \dot{x}_1 \\ \dot{x}_2 \\ \dot{x}_3 \end{bmatrix}$$

where the subscript defines the Cartesian coordinate directions. The model is

$$\dot{x}(t) = A_1 x(t) + B_1 \hat{v}(t),$$

with

$$A_1 = \begin{bmatrix} 0 & 0 & 0 & 1 & 0 & 0 \\ 0 & 0 & 0 & 0 & 1 & 0 \\ 0 & 0 & 0 & 0 & 0 & 1 \\ 0 & 0 & 0 & 0 & 0 & 0 \\ 0 & 0 & 0 & 0 & 0 & 0 \\ 0 & 0 & 0 & 0 & 0 & 0 \end{bmatrix}, \quad B_1 = \begin{bmatrix} 0 & 0 & 0 \\ 0 & 0 & 0 \\ 0 & 0 & 0 \\ 1 & 0 & 0 \\ 0 & 1 & 0 \\ 0 & 0 & 1 \end{bmatrix}.$$

The process noise covariance matrix is $Q_{c_1} = diag([q_{11}\, q_{12}\, q_{13}])$, where $q_{11}$, $q_{12}$ and $q_{13}$ are the process noise variances.

For the (almost) constant acceleration movement, the continuous time state space constant acceleration model is defined using the states

$$x(t) = \begin{bmatrix} x_1 \\ x_2 \\ x_3 \\ \dot{x}_1 \\ \dot{x}_2 \\ \dot{x}_3 \\ \ddot{x}_1 \\ \ddot{x}_2 \\ \ddot{x}_3 \end{bmatrix}$$

where the subscript defines the Cartesian coordinate directions. The model is:

$$\dot{x}(t) = A_2 x(t) + B_2 \hat{v}(t)$$

$$A_2 = \begin{bmatrix} 0 & 0 & 0 & 1 & 0 & 0 & 0 & 0 & 0 \\ 0 & 0 & 0 & 0 & 1 & 0 & 0 & 0 & 0 \\ 0 & 0 & 0 & 0 & 0 & 1 & 0 & 0 & 0 \\ 0 & 0 & 0 & 0 & 0 & 0 & 1 & 0 & 0 \\ 0 & 0 & 0 & 0 & 0 & 0 & 0 & 1 & 0 \\ 0 & 0 & 0 & 0 & 0 & 0 & 0 & 0 & 1 \\ 0 & 0 & 0 & 0 & 0 & 0 & 0 & 0 & 0 \\ 0 & 0 & 0 & 0 & 0 & 0 & 0 & 0 & 0 \\ 0 & 0 & 0 & 0 & 0 & 0 & 0 & 0 & 0 \end{bmatrix}, \quad B_2 = \begin{bmatrix} 0 & 0 & 0 \\ 0 & 0 & 0 \\ 0 & 0 & 0 \\ 0 & 0 & 0 \\ 0 & 0 & 0 \\ 0 & 0 & 0 \\ 1 & 0 & 0 \\ 0 & 1 & 0 \\ 0 & 0 & 1 \end{bmatrix}$$

The process noise covariance matrix is $Q_{C_2}$.

For the (almost hovering) constant position model, the continuous time state space constant position hovering model is defined by the states

$$x(t) = \begin{bmatrix} x_1 \\ x_2 \\ x_3 \end{bmatrix}$$

where the subscript defines the Cartesian coordinate directions. The model is:

$$\dot{x}(t) = A_3 x(t) + B_3 \hat{v}(t)$$

$$A_3 = \begin{bmatrix} 0 & 0 & 0 \\ 0 & 0 & 0 \\ 0 & 0 & 0 \end{bmatrix}, \quad B_3 = \begin{bmatrix} 1 & 0 & 0 \\ 0 & 1 & 0 \\ 0 & 0 & 0.001 \end{bmatrix}$$

The process noise covariance is $Q_{C3}$.

To efficiently describe particular embodiments, the states described above are renumbered as follows:

$x_1 \rightarrow x_1$
$x_2 \rightarrow x_2$
$x_3 \rightarrow x_3$
$\dot{x}_1 \rightarrow x_4$
$\dot{x}_2 \rightarrow x_5$
$\dot{x}_3 \rightarrow x_6$
$\ddot{x}_1 \rightarrow x_7$
$\ddot{x}_2 \rightarrow x_8$
$\ddot{x}_3 \rightarrow x_9$

The renumbered states are used below.

In particular embodiments, the transition probability model is restricted based on drone movement. For example, some embodiments include an IMM filtering process related to the physics of drone movement. When the drone is in constant velocity movement, it cannot stop immediately, rather it brakes. This means that the sequence of mode transitions is from mode 1, over mode 2, to mode 3. The direct mode transmission from mode 1 to mode 3 is forbidden. This is reflected by new constraints in the mode transition probability matrix of the IMM filter, namely in

$$p_{ij} = \begin{bmatrix} p_{11} & p_{12} & p_{13} \\ p_{21} & p_{22} & p_{23} \\ p_{31} & p_{32} & p_{33} \end{bmatrix}.$$

The new restrictions are selected as $p_{13} \leq \varepsilon_{13}$, $p_{31} \leq \varepsilon_{31}$. Here $\varepsilon_{13}$ and $\varepsilon_{31}$ are both much smaller than 1.

Particular embodiments use a nonlinear range measurement model based on a round trip time (RTT) measurement. The RTT based range measurement model is

$$h(\hat{x}(t)) = \frac{2\sqrt{\left(\hat{x}_1(k) - x_{s,1}(k)\right)^2 + \left(\hat{x}_2(k) - x_{s,2}(k)\right)^2 \left(\hat{x}_3(k) - x_{s,3}(k)\right)^2}}{c}$$

where $x_s(.)$ denotes the serving site position and the constant $c$ is the speed of the light. The derivative of the measurement model is defined as

$$\frac{\partial h(\hat{x})(k)}{\partial \hat{x}} = \left( \begin{array}{c} \dfrac{2\left(\hat{x}_1(k) - x_{s,1}(k)\right)}{c\sqrt{\left(\hat{x}_1(k) - x_{s,1}(k)\right)^2 + \left(\hat{x}_2(k) - x_{s,2}(k)\right)^2 + \left(\hat{x}_3(k) - x_{s,3}(k)\right)^2}} \\[4mm] \dfrac{2\left(\hat{x}_2(k) - x_{s,2}(k)\right)}{c\sqrt{\left(\hat{x}_1(k) - x_{s,1}(k)\right)^2 + \left(\hat{x}_2(k) - x_{s,2}(k)\right)^2 + \left(\hat{x}_3(k) - x_{s,3}(k)\right)^2}} \\[4mm] \dfrac{2\left(\hat{x}_3(k) - x_{s,3}(k)\right)}{c\sqrt{\left(\hat{x}_1(k) - x_{s,1}(k)\right)^2 + \left(\hat{x}_2(k) - x_{s,2}(k)\right)^2 + \left(\hat{x}_3(k) - x_{s,3}(k)\right)^2}} \end{array} \right)^T$$

Some embodiments use a directional measurement model. Using configured information about the location and orientation of the antenna array used for angle of arrival (AoA) or angle of transmission (AoT) measurement, the measured AoA or AoT can be readily transformed to the Cartesian Earth Tangential co-ordinate system where drone state estimation is performed. Assuming that azimuth and elevation angles $\varphi$ and $\theta$ are available, they relate to the estimated states via the following 2-dimensional measurement vector equation

$$h(\hat{x}(k)) = \begin{pmatrix} \hat{\varphi}(k) \\ \hat{\theta}(k) \end{pmatrix} = \left( \begin{array}{c} tan^{-1}\left(\dfrac{\hat{x}_2(k) - x_{2,s}(k)}{\hat{x}_1(k) - x_{1,s}(k)}\right) \\[4mm] tan^{-1}\left(\dfrac{\hat{x}_3(k) - x_{3,s}(k)}{\sqrt{\left(\hat{x}_1(k) - x_{s,1}(k)\right)^2 + \left(\hat{x}_2(k) - x_{s,2}(k)\right)^2}}\right) \end{array} \right),$$

$$\hat{x}_1(k) - x_{1,s}(k) > 0$$

$$h(\hat{x}(k)) = \begin{pmatrix} \hat{\varphi}(k) \\ \hat{\theta}(k) \end{pmatrix} = \left( \begin{array}{c} \pi + tan^{-1}\left(\dfrac{\hat{x}_2(k) - x_{2,s}(k)}{\hat{x}_1(k) - x_{1,s}(k)}\right) \\[4mm] tan^{-1}\left(\dfrac{\hat{x}_3(k) - x_{3,s}(k)}{\sqrt{\left(\hat{x}_1(k) - x_{s,1}(k)\right)^2 + \left(\hat{x}_2(k) - x_{s,2}(k)\right)^2}}\right) \end{array} \right),$$

$$\hat{x}_1(k) - x_{1,s}(k) < 0$$

$$\hat{x}_2(k) - x_{2,s}(k) > 0$$

$$h(\hat{x}(k)) = \begin{pmatrix} \hat{\varphi}(k) \\ \hat{\theta}(k) \end{pmatrix} = \left( \begin{array}{c} -\pi + tan^{-1}\left(\dfrac{\hat{x}_2(k) - x_{2,s}(k)}{\hat{x}_1(k) - x_{1,s}(k)}\right) \\[4mm] tan^{-1}\left(\dfrac{\hat{x}_3(k) - x_{3,s}(k)}{\sqrt{\left(\hat{x}_1(k) - x_{s,1}(k)\right)^2 + \left(\hat{x}_2(k) - x_{s,2}(k)\right)^2}}\right) \end{array} \right),$$

$$\hat{x}_1(k) - x_{1,s}(k) < 0$$

$$\hat{x}_2(k) - x_{2,s}(k) < 0$$

Differentiation results in

$$\frac{\partial h(\hat{x})(k)}{\partial \hat{x}} = \begin{pmatrix} \dfrac{\partial \hat{\varphi}}{\partial \hat{x}_1}(k) & \dfrac{\partial \hat{\varphi}}{\partial \hat{x}_2}(k) \\[2mm] \dfrac{\partial \hat{\theta}}{\partial \hat{x}_1}(k) & \dfrac{\partial \hat{\theta}}{\partial \hat{x}_2}(k) \end{pmatrix}$$

$$\frac{\partial \hat{\varphi}}{\partial \hat{x}_1}(k) = -\frac{1}{\left(1 + \left(\frac{\hat{x}_2(k) - x_{2,s}(k)}{\hat{x}_1(k) - x_{1,s}(k)}\right)^2\right)} \frac{\hat{x}_2(k) - x_{2,s}(k)}{\left(\hat{x}_1(k) - x_{1,s}(k)\right)^2}$$

$$\frac{\partial \hat{\varphi}}{\partial \hat{x}_2}(k) = \frac{1}{\left(1 + \left(\frac{\hat{x}_2(k) - x_{2,s}(k)}{\hat{x}_1(k) - x_{1,s}(k)}\right)^2\right)} \frac{1}{\left(\hat{x}_1(k) - x_{1,s}(k)\right)}$$

$$\frac{\partial \hat{\theta}}{\partial \hat{x}_1}(k)$$

$$= -\frac{1}{\left(1 + \frac{\left(\hat{x}_3(k) - x_{3,s}(k)\right)^2}{\left(\hat{x}_1(k) - x_{s,1}(k)\right)^2 + \left(\hat{x}_2(k) - x_{s,2}(k)\right)^2}\right)} \frac{\left(\hat{x}_1(k) - x_{s,1}(k)\right)}{\left(\left(\hat{x}_1(k) - x_{s,1}(k)\right)^2 + \left(\hat{x}_2(k) - x_{s,2}(k)\right)^2\right)^{\frac{3}{2}}}$$

$$\frac{\partial \hat{\theta}}{\partial \hat{x}_2}(k)$$

$$= -\frac{1}{\left(1 + \frac{\left(\hat{x}_3(k) - x_{3,s}(k)\right)^2}{\left(\hat{x}_1(k) - x_{s,1}(k)\right)^2 + \left(\hat{x}_2(k) - x_{s,2}(k)\right)^2}\right)} \frac{\left(\hat{x}_2(k) - x_{s,2}(k)\right)}{\left(\left(\hat{x}_1(k) - x_{s,1}(k)\right)^2 + \left(\hat{x}_2(k) - x_{s,2}(k)\right)^2\right)^{\frac{3}{2}}}$$

An example of the drone IMM estimator operation and performance is illustrated in the following steps.

State estimation scenario:

1. The drone starts at initial position [0 0 0]' with the initial velocity [0 0 0]'
2. It continues with constant acceleration (increasing velocity) for a short period, then constant speed, followed by braking, during 40s upwards (mode 1)
3. Then it does hovering for 20s (mode 3)
4. The movement is followed by constant acceleration (increasing velocity), followed by constant speed, towards the right for 20s (mode 1)
5. Then it does a coordinated left turn for 20s (mode 2)
6. The movement is continued by constant velocity towards the right for 20s (mode 1)
7. Then the drone performs a coordinated right turn for 20s (mode 2)
8. Then the drone decreasing velocity for 20s (mode 1)
9. Then finally the drone performs hovering for 20s (mode 3)

Site positions:

$$S_1 = (500 \quad 200 \quad -100)'$$

Parameters:

$T$ = 1 second
n = 180 number of discrete time steps
Noise variances are selected as

$$R = \begin{bmatrix} 5^2 & 0 & 0 \\ 0 & 0.025^2 & 0 \\ 0 & 0 & 0.025^2 \end{bmatrix}$$

Process noise variances for constant velocity, acceleration and hovering models are 0.1, 1.0 and 0.01, respectively.

IMM transition probability matrix

$$p_{ij} = \begin{bmatrix} 0.98 & 0.04 & 0.01 \\ 0.05 & 0.85 & 0.05 \\ 0.001 & 0.06 & 0.95 \end{bmatrix}$$

Initial conditions:

$$X_0^1 = [0 \quad 0 \quad 0 \quad 0 \quad 0 \quad 1]'$$

$$P_0^1 = diag([100 \quad 100 \quad 100 \quad 4 \quad 4 \quad 4]\})$$

$$X_0^2 = [0 \quad 0 \quad 0 \quad 0 \quad 0 \quad 1 \quad 0 \quad 0 \quad 0]'$$

$$P_0^2 = diag([100 \quad 100 \quad 100 \quad 4 \quad 4 \quad 4 \quad 1 \quad 1 \quad 1])$$

$$X_0^3 = [0 \quad 0 \quad 0]'$$

$$P_0^3 = diag([100 \quad 100 \quad 100]\})$$

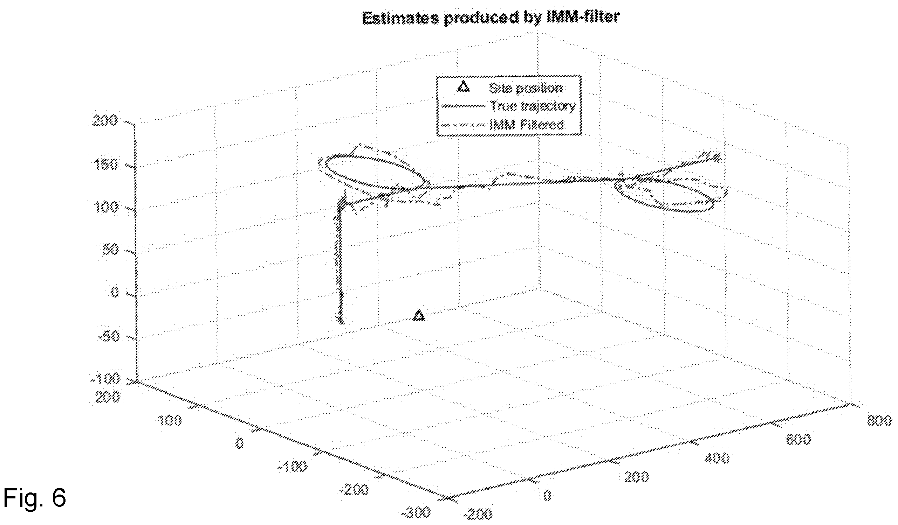

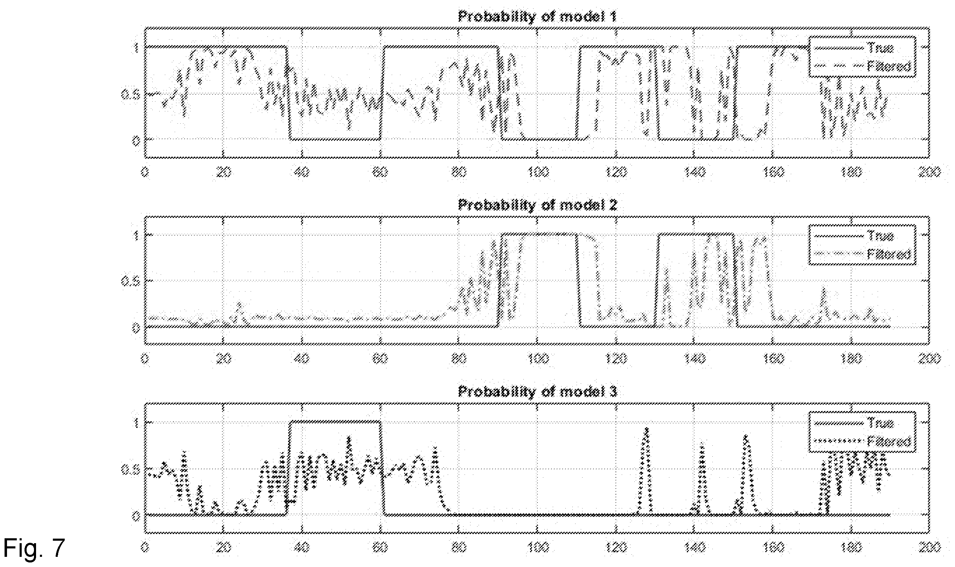

The result of the simulation is illustrated in FIGURES 6 and 7, which illustrate the true state trajectory, the IMM filtered trajectory, the site positions, as well as the true and estimated mode probabilities.

FIGURE 6 is a three-dimensional graph illustrating a flight path of a drone. The solid line represents the actual drone trajectory, and the dashed line represents the estimated trajectory.

FIGURE 7 is a time graph illustrating the probability that the IMM model is in any of the three modes at a particular time. The horizontal axis represents time in seconds and the vertical axis represents probability.

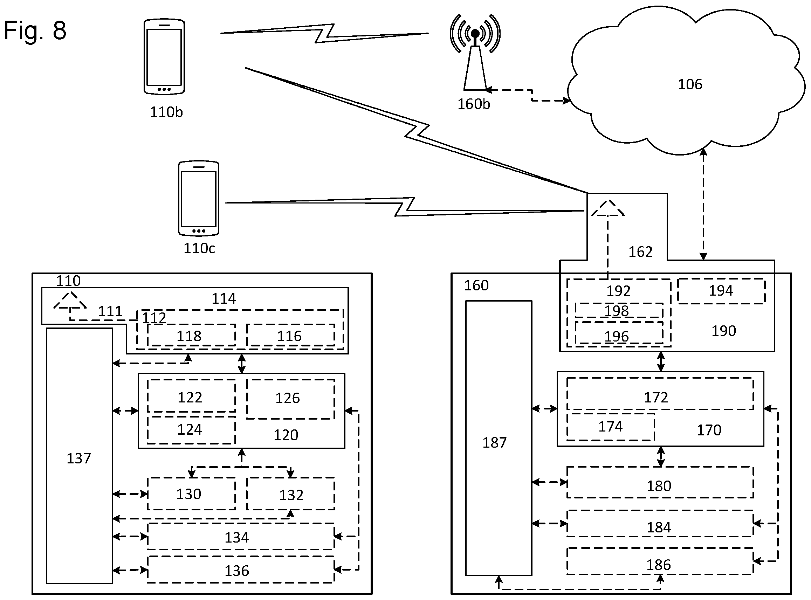

FIGURE 8 illustrates an example wireless network, according to certain embodiments. The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and may then also be referred to as femto base stations, pico base stations, micro base stations, or macro base stations.

A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 8, network node 160 includes processing circuitry 170, device readable medium 180, interface 190, auxiliary equipment 184, power source 186, power circuitry 187, and antenna 162. Although network node 160 illustrated in the example wireless network of FIGURE 8 may represent a device that includes the illustrated combination of hardware components, other embodiments may comprise network nodes with different combinations of components (e.g., the same components, different components, fewer components, or more components). It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and an RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node, such as the scheduling operations described herein and with respect of FIGURES 2-4. The operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality. For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units.

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160, but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signaling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162. Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 190 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160. For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in FIGURE 8 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air.

In some embodiments, a WD may be configured to transmit and/or receive information without direct human interaction. For instance, a WD may be designed to transmit information to a network on a predetermined schedule, when triggered by an internal or external event, or in response to requests from the network.

Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device.

As yet another specific example, in an Internet of Things (IoT) scenario, a WD may represent a machine or other device that performs monitoring and/or measurements and transmits the results of such monitoring and/or measurements to another WD and/or a network node. The WD may in this case be a machine-to-machine (M2M) device, which may in a 3GPP context be referred to as an MTC device. As one example, the WD may be a UE implementing the 3GPP narrow band internet of things (NB-IoT) standard. Examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation.

A WD as described above may represent the endpoint of a wireless connection, in which case the device may be referred to as a wireless terminal. Furthermore, a WD as described above may be mobile, in which case it may also be referred to as a mobile device or a mobile terminal.

In some embodiments, the wireless device may comprise a component of an aerial vehicle, such as a drone. In some embodiments, the wireless device may provide command and control for the aerial vehicle. In some embodiments, the wireless device may provide multimedia transmission from the aerial vehicle.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 114 is connected to antenna 111 and processing circuitry 120 and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114. Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

In some embodiments, WD 110 may include regular-power radio front end circuitry and/or antenna 111 and low-power radio front end circuitry and/or antenna 111. In some embodiments, the same radio circuitry may be configurable to operate as a low-power radio or a regular-power radio as needed over time.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips. In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner. In any of those embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g. RAM or ROM), mass storage media (e.g., a hard disk), removable storage media (e.g., a CD or a DVD), and/or any other volatile or non-volatile, non-transitory device readable and/or computer executable memory devices that store information, data, and/or instructions that may be used by processing circuitry 120. In some embodiments, processing circuitry 120 and device readable medium 130 may be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected). User interface equipment 132 may include input interfaces, devices and circuits, and output interfaces, devices and circuits. User interface equipment 132 is configured to allow input of information into WD 110 and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry. Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

Although the subject matter described herein may be implemented in any appropriate type of system using any suitable components, the embodiments disclosed herein are described in relation to a wireless network, such as the example wireless network illustrated in FIGURE 8. For simplicity, the wireless network of FIGURE 8 only depicts network 106, network nodes 160 and 160b, and WDs 110, 110b, and 110c. In practice, a wireless network may further include any additional elements suitable to support communication between wireless devices or between a wireless device and another communication device, such as a landline telephone, a service provider, or any other network node or end device. Of the illustrated components, network node 160 and (WD 110 are depicted with additional detail. The wireless network may provide communication and other types of services to one or more wireless devices to facilitate the wireless devices' access to and/or use of the services provided by, or via, the wireless network.

The communication system 106 may itself be connected to a host computer (not shown), which may be embodied in the hardware and/or software of a standalone server, a cloud-implemented server, a distributed server or as processing resources in a server farm. The host computer may be under the ownership or control of a service provider or may be operated by the service provider or on behalf of the service provider.

The communication system of FIGURE 8 as a whole enables connectivity between one of the connected WDs 110 and the host computer. The connectivity may be described as an over-the-top (OTT) connection. The host computer and the connected WDs 110 are configured to communicate data and/or signaling via the OTT connection, using an access network, a core network, any intermediate network and possible further infrastructure (not shown) as intermediaries. The OTT connection may be transparent in the sense that at least some of the participating communication devices through which the OTT connection passes are unaware of routing of uplink and downlink communications.

The host computer may provide host applications which may be operable to provide a service to a remote user, such as a WD 110 connecting via an OTT connection terminating at the WD 110 and the host computer. In providing the service to the remote user, the host application may provide user data which is transmitted using the OTT connection. The "user data" may be data and information described herein as implementing the described functionality. In one embodiment, the host computer may be configured for providing control and functionality to a service provider and may be operated by the service provider or on behalf of the service provider. The host computer may be enabled to observe, monitor, control, transmit to and/or receive from the network node 160 and or the WD 110.

One or more of the various embodiments in this disclosure improve the performance of OTT services provided to the WD 110 using the OTT connection. More precisely, the teachings of some of these embodiments may improve the data rate, latency, and/or power consumption and thereby provide benefits such as reduced user waiting time, relaxed restriction on file size, better responsiveness, extended battery lifetime, etc.

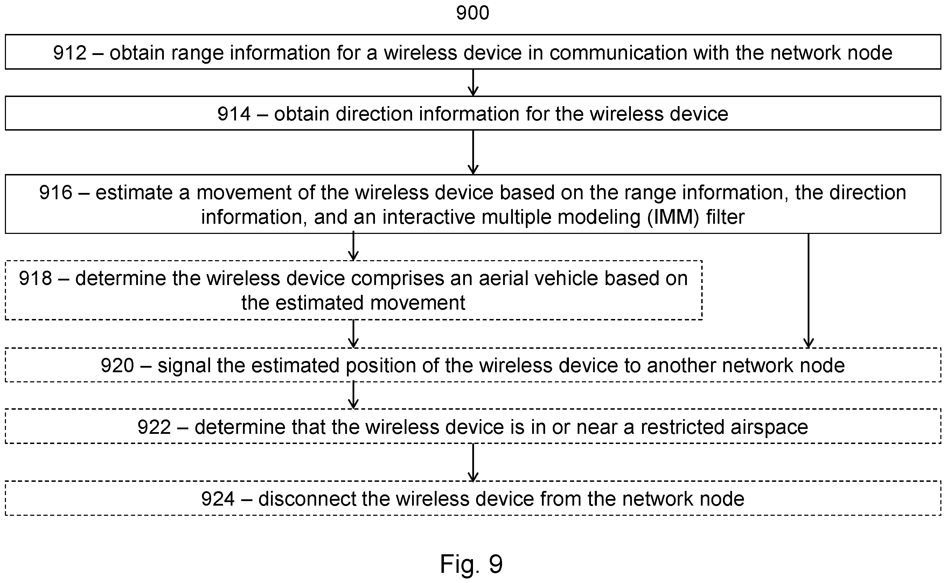

FIGURE 9 is a flowchart illustrating an example method 900 in a network node, according to certain embodiments. In particular embodiments, one or more steps of FIGURE 9 may be performed by network node 160 described with respect to FIGURE 8.

The method begins at step 912 where a network node (e.g., network node 160) obtains range information for a wireless device in communication with the network node. In particular embodiments, obtaining the range information for the wireless device comprises obtaining (e.g., calculating) a transmission RTT between the network node and the wireless device, for example, according to any of the embodiments and examples described above. Other embodiments may use timing advance to obtain the range information. For example, the network node may determine that a UE enabled aerial vehicle may be at a distance of 200 yards from the base station based on the RTT of communications (e.g., control, multimedia, etc.) with the aerial vehicle.

At step 914, the network node obtains direction information for the wireless device. In particular embodiments, obtaining the direction information for the wireless device comprises one or more of determining elevation and azimuth information for the wireless device, determining one of an angle of arrival or an angle to transmission for a wireless transmission between the network node and the wireless device, determining codebook based beamforming information for the wireless device, determining reciprocity assisted beamforming information for the wireless device, and/or determining direction information according to any of the embodiments and/or examples described herein. For example, the network node may determine direction information for the UE enabled aerial vehicle based on angle between two beams transmitted between the network node and the aerial vehicle.

At step 916, the network node estimates a movement of the wireless device based on the range information, the direction information, and an IMM filter. In particular embodiments, the IMM filter comprises a 3D constant velocity model, a 3D constant acceleration model, and a 3D constant position model. For example, the network node may use the range and direction information obtained in the previous steps as input to the three-mode IMM filter described above to estimate movement of an aerial vehicle.

In particular embodiments, estimating the movement of the wireless device is further based on a difference between an estimated altitude of the wireless device and an obtained ground altitude. For example, the network node may adjust an absolute altitude value based on a terrain map of the terrain near the network node.

At step 918, the network node optionally determines that the wireless device comprises an aerial vehicle based on the estimated movement. For example, the network node can distinguish between a ground-based UE and an UE enabled aerial vehicle based on the estimated movement.

At step 920, the network node optionally signals the estimated movement of the wireless device to another network node. In some embodiments, the network node signals an estimated position of the wireless device to another network node. For example, the network node may signal an estimated position (e.g., based on the estimated movement) to another network node, such as a core network node, that is equipped to analyze the position/movement information and determine, for example, whether the wireless device is in or approaching restricted airspace.

At step 922, the network node optionally determines that the wireless device is in or near a restricted airspace. For example, the network node may include sufficient knowledge of nearby airspace to determine whether the UE enabled aerial vehicle is in or near restricted airspace.

In some embodiments, the network node determines that the wireless device is in or near a restricted airspace by receiving an indication from another network node, such as a core network node. For example, the core network node described with respect to step 920 may determine that the aerial vehicle is in or near a restricted airspace and send a notification to the network node.

At step 924, the network node optionally disconnects the wireless device from the network node. For example, based on determining that the wireless device is in or near a restricted airspace (step 922), the network node may determine to disconnect the wireless device. In some embodiments, the network node is instructed to disconnect the wireless device by another network node, such as the core network node described with respect to step 920 (e.g., step 922 is not performed).

Modifications, additions, or omissions may be made to method 900 of FIGURE 9. Additionally, one or more steps in the method of FIGURE 9 may be performed in parallel or in any suitable order.

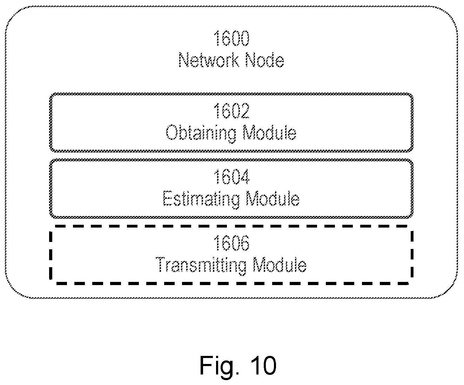

FIGURE 10 illustrates an example network node, according to certain embodiments. The network node 1600 may comprise network node 160 illustrated in FIGURE 8.

Network node 1600 is operable to carry out the example method described with reference to FIGURE 9 and possibly any other processes or methods disclosed herein. It is also to be understood that the method of FIGURE 9 is not necessarily carried out solely by apparatus 1600. At least some operations of the method can be performed by one or more other entities, including virtual apparatuses.

Network node 1600 may comprise processing circuitry such as processing circuitry 170 of FIGURE 8. In some implementations, the processing circuitry may be used to cause obtaining module 1602, estimating module 1604, transmitting module 1606, and any other suitable units of network node 1600 to perform corresponding functions according one or more embodiments of the present disclosure.

As illustrated in FIGURE 10, network node 1600 includes obtaining module 1602, estimating module 1604, and may include transmitting module 1606. In certain embodiments, obtaining module 1602 may obtain range and direction information according to any of the embodiments and examples described herein. Estimating module 1604 may estimate movement of a wireless device according to any of the embodiments and examples described herein. Transmitting module 1604 may signal information about the movement of a wireless device to another network node, according to any of the embodiments and examples described herein.

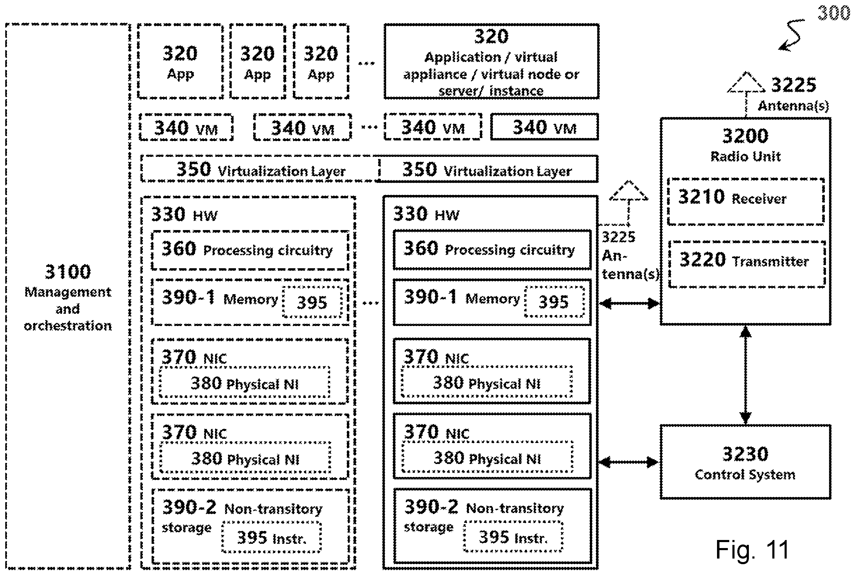

FIGURE 11 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein, such as the method of FIGURE 9, may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 11, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high-volume server hardware, physical switches, and physical storage, which can be located in data centers, and customer premise equipment.

**In** the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in FIGURE 11.

**In** some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

**In** some embodiments, some signaling can be effected with the use of control system 3230 which may alternatively be used for communication between the hardware nodes 330 and radio units 3200.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa.

The foregoing description sets forth numerous specific details. It is understood, however, that embodiments may be practiced without these specific details. In other instances, well-known circuits, structures and techniques have not been shown in detail in order not to obscure the understanding of this description. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments, whether or not explicitly described.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the claims below.

**Claims**

1. A method (900) for use in a network node, the method comprising:

   obtaining (912) range information for a wireless device in communication with the network node;
   obtaining (914) direction information for the wireless device;
   estimating (916) a movement of the wireless device based on the range information, the direction information, and an interactive multiple modeling, IMM, filter, wherein the IMM filter comprises a three-dimensional, 3D, constant velocity model, a 3D constant acceleration model, and a 3D constant position model; and
   determining (918) the wireless device comprises an aerial vehicle based on the estimated movement.

2. The method of claim 1, further comprising signaling (920) the estimated movement of the wireless device to another network node.

3. The method of claim 1 or 2, further comprising disconnecting (924) the wireless device from the network node.

4. The method of claim 3, further comprising determining (922), based on the estimated position of the wireless device, that the wireless device is in or near a restricted airspace, and wherein disconnecting the wireless device from the network node is performed in response to determining the wireless device is in or near the restricted airspace.

5. The method of any one of claims 1-4, wherein obtaining the range information for the wireless device comprises calculating a transmission round trip time (RTT) between the network node and the wireless device.

6. The method of any one of claims 1-5, wherein obtaining the direction information for the wireless device comprises determining elevation and azimuth information for the wireless device.

7. The method of any one of claims 1-5, wherein obtaining the direction information for the wireless device comprises determining one of an angle of arrival or an angle to transmission for a wireless transmission between the network node and the wireless device.

8. The method of any one of claims 1-5, wherein obtaining the direction information for the wireless device comprises determining codebook based beamforming information for the wireless device.

9. The method of any one of claims 1-5, wherein obtaining the direction information for the wireless device comprises determining reciprocity assisted beamforming information for the wireless device.

10. The method of any one of claims 1-9, wherein estimating the movement of the wireless device is further based on a difference between an estimated altitude of the wireless device and an obtained ground altitude.

11. The method of any one of claims 1-10, wherein the network node comprises a base station.

12. A network node (160) comprising processing circuitry (170) operable to:

obtain range information for a wireless device in communication with the network node;
obtain direction information for the wireless device; and
estimate a movement of the wireless device based on the range information, the direction information, and an interactive multiple modeling, IMM, filter, wherein the IMM filter comprises a three-dimensional, 3D, constant velocity model, a 3D constant acceleration model, and a 3D constant position model; and
determine the wireless device comprises an aerial vehicle based on the estimated movement.

13. A non-transitory computer readable medium storing computer readable program code, the computer readable program code operable, when executed by processing circuitry, to perform any one of the methods of claims 1-11.

14. A computer program product configured to be operable to perform any one of the methods of claims 1-11.

**Patentansprüche**

1. Verfahren (900) zur Nutzung in einem Netzwerkknoten, wobei das Verfahren Folgendes umfasst:

Einholen (912) von Bereichsinformationen für ein drahtloses Gerät in Kommunikation mit dem Netzwerkknoten;
Einholen (914) von Richtungsinformationen für das drahtlose Gerät;
Schätzen (916) einer Bewegung des drahtlosen Geräts basierend auf den Bereichsinformationen, den Richtungsinformationen und einem Filter zur interaktiven Mehrfachmodellierung, IMM, wobei der IMM-Filter ein konstantes, dreidimensionales, 3D, Geschwindigkeitsmodell, ein konstantes 3D-Beschleunigungsmodell und ein konstantes 3D-Positionsmodell umfasst; und
Bestimmen (918), dass das drahtlose Gerät ein Luftfahrzeug basierend auf der geschätzten Bewegung umfasst.

2. Verfahren nach Anspruch 1, ferner umfassend Signalisieren (920) der geschätzten Bewegung des drahtlosen Geräts zu einem anderen Netzwerkknoten.

3. Verfahren nach Anspruch 1 oder 2, ferner umfassend Trennen (924) des drahtlosen Geräts von dem Netzwerkknoten.

4. Verfahren nach Anspruch 3, ferner umfassend Bestimmen (922), basierend auf der geschätzten Position des drahtlosen Geräts, dass sich das drahtlose Gerät in einem oder in der Nähe eines beschränkten Luftraums befindet, und wobei das Trennen des drahtlosen Geräts von dem Netzwerkknoten als Reaktion auf das Bestimmen durchgeführt wird, dass sich das drahtlose Gerät in dem oder in der Nähe des beschränkten Luftraums befindet.

5. Verfahren nach einem der Ansprüche 1-4, wobei das Einholen der Bereichsinformationen für das drahtlose Gerät Berechnen einer Übertragungs-Round-Trip-Time (Übertragungs-RTT) zwischen dem Netzwerkknoten und dem drahtlosen Gerät umfasst.

6. Verfahren nach einem der Ansprüche 1-5, wobei das Einholen der Richtungsinformationen für das drahtlose Gerät Bestimmen von Elevation- und Azimut-Informationen für das drahtlose Gerät umfasst.

7. Verfahren nach einem der Ansprüche 1-5, wobei das Einholen der Richtungsinformationen für das drahtlose Gerät Bestimmen von einem eines Ankunftswinkels oder eines Winkels zur Übertragung für eine drahtlose Übertragung zwischen dem Netzwerkknoten und dem drahtlosen Gerät umfasst.

8. Verfahren nach einem der Ansprüche 1-5, wobei das Einholen der Richtungsinformationen für das drahtlose Gerät Bestimmen eines Codebuchs basierend auf Strahlformungsinformationen für das drahtlose Gerät umfasst.

9. Verfahren nach einem der Ansprüche 1-5, wobei das Einholen der Richtungsinformationen für das drahtlose Gerät Bestimmen von reziprozitätsunterstützten Strahlformungsinformationen für das drahtlose Gerät umfasst.

10. Verfahren nach einem der Ansprüche 1-9, wobei das Schätzen der Bewegung des drahtlosen Geräts ferner auf einem Unterschied zwischen einer geschätzten Höhe des drahtlosen Geräts und einer eingeholten Bodenhöhe basiert.

11. Verfahren nach einem der Ansprüche 1-10, wobei der Netzwerkknoten eine Basisstation umfasst.

12. Netzwerkknoten (160) umfassend eine Verarbeitungsschaltung (170), die zu Folgendem betreibbar ist:

Einholen von Bereichsinformationen für ein drahtloses Gerät in Kommunikation mit dem Netzwerkknoten;
Einholen von Richtungsinformationen für das drahtlose Gerät; und
Schätzen einer Bewegung des drahtlosen Geräts basierend auf den Bereichsinformationen, den Richtungsinformationen und einem Filter zur interaktiven Mehrfachmodellierung, IMM, wobei der IMM-Filter ein konstantes, dreidimensionales, 3D, Geschwindigkeitsmodell, ein konstantes 3D-Beschleunigungsmodell und ein konstantes 3D-Positionsmodell umfasst; und
Bestimmen, dass das drahtlose Gerät ein Luftfahrzeug basierend auf der geschätzten Bewegung umfasst.

13. Nicht-transitorisches, computerlesbares Medium, das computerlesbaren Programmcode speichert, wobei der computerlesbare Programmcode, wenn er von einer Verarbeitungsschaltung ausgeführt wird, dazu betreibbar ist, eines der Verfahren nach den Ansprüchen 1-11 durchzuführen.

14. Computerprogrammprodukt, das dazu konfiguriert ist, dazu betreibbar zu sein, eines der Verfahren nach den Ansprüchen 1-11 durchzuführen

**Revendications**

1. Procédé (900) destiné à être utilisé dans un nœud de réseau, le procédé comprenant les étapes consistant à :

obtenir (912) des informations de portée pour un dispositif sans fil en communication avec le nœud de réseau ;
obtenir (914) des informations de direction pour le dispositif sans fil ;
estimer (916) un mouvement du dispositif sans fil sur la base des informations de portée, des informations de direction et d'un filtre de modélisation multiple interactive (IMM), le filtre IMM comprenant un modèle tridimensionnel à vitesse constante, un modèle 3D à accélération constante et un modèle 3D à position constante ; et
déterminer (918) que le dispositif sans fil comprend un véhicule aérien sur la base du mouvement estimé.

2. Procédé selon la revendication 1, comprenant en outre la signalisation (920) du mouvement estimé du dispositif sans fil vers un autre nœud de réseau.

3. Procédé selon la revendication 1 ou 2, comprenant en outre la déconnexion (924) du dispositif sans fil du nœud de réseau.

4. Procédé selon la revendication 3, comprenant en outre la détermination (922), sur la base de la position estimée du dispositif sans fil, que le dispositif sans fil se trouve dans ou à proximité d'un espace aérien restreint, et dans lequel la déconnexion du dispositif sans fil du nœud de réseau est effectuée en réponse à la détermination que le dispositif sans fil se trouve dans ou à proximité de l'espace aérien restreint.

5.  Procédé selon l'une quelconque des revendications 1 à 4, dans lequel l'obtention des informations de portée pour le dispositif sans fil comprend le calcul d'un temps de trajet aller-retour de transmission (RTT) entre le nœud de réseau et le dispositif sans fil.

6.  Procédé selon l'une quelconque des revendications 1 à 5, dans lequel l'obtention des informations de direction pour le dispositif sans fil comprend la détermination des informations d'élévation et d'azimut pour le dispositif sans fil.

7.  Procédé selon l'une quelconque des revendications 1 à 5, dans lequel l'obtention des informations de direction pour le dispositif sans fil comprend la détermination d'un angle d'arrivée ou d'un angle de transmission pour une transmission sans fil entre le nœud de réseau et le dispositif sans fil.

8.  Procédé selon l'une quelconque des revendications 1 à 5, dans lequel l'obtention des informations de direction pour le dispositif sans fil comprend la détermination d'informations de formation de faisceau basées sur un livre de codes pour le dispositif sans fil.

9.  Procédé selon l'une quelconque des revendications 1 à 5, dans lequel l'obtention des informations de direction pour le dispositif sans fil comprend la détermination d'informations de formation de faisceau assistée par réciprocité pour le dispositif sans fil.

10. Procédé selon l'une quelconque des revendications 1 à 9, dans lequel l'estimation du mouvement du dispositif sans fil est en outre basée sur une différence entre une altitude estimée du dispositif sans fil et une altitude au sol obtenue.

11. Procédé selon l'une quelconque des revendications 1 à 10, dans lequel le nœud de réseau comprend une station de base.

12. Nœud de réseau (160) comprenant un circuit de traitement (170) pouvant fonctionner pour :

    obtenir des informations de portée pour un dispositif sans fil en communication avec le nœud de réseau ;
    obtenir des informations de direction pour le dispositif sans fil ; et
    estimer un mouvement du dispositif sans fil sur la base des informations de portée, des informations de direction et d'un filtre de modélisation multiple interactive (IMM), dans lequel le filtre IMM comprend un modèle tridimensionnel à vitesse constante 3D, un modèle 3D à accélération constante et un modèle 3D à position constante ; et
    déterminer si le dispositif sans fil comprend un véhicule aérien sur la base du mouvement estimé.

13. Support lisible par ordinateur non transitoire stockant un code de programme lisible par ordinateur, le code de programme lisible par ordinateur étant opérationnel, lorsqu'il est exécuté par un circuit de traitement, pour mettre en œuvre l'un quelconque des procédés des revendications 1 à 11.

14. Produit de programme informatique configuré pour être opérationnel pour mettre en œuvre l'un quelconque des procédés des revendications 1 à 11.

Fig. 1

Fig. 2

Fig. 3

EP 4 127 761 B1

Base station    Transmission                                    Reception       $RTT = t_4 - t_1 - UE\ RxTx$

$t_1$                                                $t_4$

RRC message with UE RxTx

UE          $t_2$                        $t_3$

Reception              Transmission

$UE\ RxTx = t_3 - t_2$

Fig. 4

Fig. 5

$\{z_i\}_{i=1}^{n_k}$

noisy

measurements

tracking

$\{\hat{x}_i\}_{i=1}^{n_k}$

state

estimation

detection

$P(D|z(\hat{x}(.)))$

Interactive multiple modeling (IMM)

Estimates produced by IMM-filter

Fig. 6

EP 4 127 761 B1

Fig. 7

Fig. 8

EP 4 127 761 B1

900

| 912 – obtain range information for a wireless device in communication with the network node |

↓

| 914 – obtain direction information for the wireless device |

↓

| 916 – estimate a movement of the wireless device based on the range information, the direction information, and an interactive multiple modeling (IMM) filter |

↓

| 918 – determine the wireless device comprises an aerial vehicle based on the estimated movement |

↓

| 920 – signal the estimated position of the wireless device to another network node |

↓

| 922 – determine that the wireless device is in or near a restricted airspace |

↓

| 924 – disconnect the wireless device from the network node |

Fig. 9

EP 4 127 761 B1

EP 4 127 761 B1

1600
Network Node

1602
Obtaining Module

1604
Estimating Module

1606
Transmitting Module

Fig. 10

Fig. 11

**EP 4 127 761 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018152909 A1

- US 2017060810 A1